# FASCICULE DE BREVET EUROPEEN

(11) **EP 0 695 253 B1**
(45) Date de publication et mention de la délivrance du brevet: **23.09.1998**
(21) Numéro de dépôt: 94915201.1
(22) Date de dépôt: 03.05.1994
(51) Int. Cl.: B61C 17/04, H04N 7/18, B60R 1/00

(54) **SYSTEME DE DEPORT D'IMAGERIE APPLIQUE A LA CONDUITE DE VEHICULES ET CONVOIS FERROVIAIRES**
BILDÜBERTRAGUNGSSYSTEM ZUM FÜHREN VON FAHRZEUGEN UND EISENBAHNZÜGEN
IMAGING OFFSET SYSTEM APPLIED TO THE DRIVING OF VEHICULES AND TRAINS

(30) Priorité: 04.05.1993 FR 9305278
(43) Date de publication de la demande: 07.02.1996
(73) Titulaire: SOCIETE NATIONALE DES CHEMINS DE FER FRANCAIS, F-75008 Paris (FR)
(72) Inventeur: BERNARD, Patrice, F-75009 Paris (FR)
(86) Numéro de dépôt international: FR9400505
(87) Numéro de publication internationale: WO9425324

(56) Documents cités:
- EP-A- 0 314 642
- DE-U- 9 010 195
- DE-U- 9 201 038
- TELCOM REPORT, vol.9, no.2, Mars 1986, BERLIN, DE pages 132 - 135

## Description

### PREAMBULE

La substitution d'une vision s'appuyant sur des moyens optiques ou électroniques à la vue directe de la voie constitue une réponse économique, technique et humaine nouvelle à la conduite des véhicules et convois ferroviaires. C'est ce que se propose de réaliser la présente invention.

Celle-ci permettra de substantielles économies lors de la modernisation ou de la construction de matériel roulant.

Elle facilitera l'exploitation du réseau en permettant dans certains cas d'éviter que le conducteur doive changer de cabine lors du retournement des rames voyageurs arrivées à leur terminus et en facilitant le refoulement des rames dans les gares notamment en cul-de-sac.

Elle accroîtra la sécurité du conducteur.

### ETAT DE LA TECHNIQUE

Dans l'art antérieur, la conduite se fait par vue directe depuis une cabine située le plus souvent à l'avant de la rame. S'il s'agit d'une rame automotrice indéformable, il faut une cabine à chaque extrémité; s'il s'agit d'une locomotive, il faut une cabine à chaque extrémité de la locomotive; et si une locomotive remorque ou pousse une rame dite réversible, il faut une troisième cabine à l'extrémité de la rame pour les cas où la locomotive est en queue.

Il existe des cas où une seule cabine est nécessaire. L'exemple le plus répandu est celui de locomotives construites aux Etats-Unis d'Amérique, dans lesquelles la cabine dépasse latéralement la caisse de la locomotive et donne, outre la vue d'un côté, une certaine vue vers l'avant et vers l'arrière. Un autre exemple est celui d'une certaine série d'autorails utilisés naguère par la SNCF, dans laquelle le poste de conduite dépassait du toit et disposait ainsi d'une vue panoramique ou encore celui de certaines locomotives où la cabine occupait une position centrale élevée.

L'art antérieur présente des inconvénients. Dans le cas où chaque cabine est spécialisée pour un sens de conduite, un premier inconvénient est économique et vient du coût de la multiplication des cabines; un deuxième inconvénient concerne l'exploitation, lors d'un "retournement" de la rame (c'est-à-dire d'une inversion du sens de marche en service) : il est lié au temps pris par le mécanicien pour mettre hors service une cabine, se déplacer jusqu'à une autre cabine et la mettre en service. Ce temps peut conduire à accroître le nombre de rames nécessaires pour assurer un certain roulement. Un autre inconvénient concerne la mise à quai par refoulement dans une gare en cul-de-sac d'une rame non pourvue d'une cabine de conduite en queue de rame. La sécurité exige alors en général la présence d'un agent supplémentaire pour effectuer la manoeuvre, en contact radio avec le mécanicien situé à l'autre extrémité.

L'inconvénient d'une cabine de conduite unique située latéralement, outre un champ de vision malgré tout limité, est que, pour que la cabine dépasse, il faut réduire le gabarit du reste de la locomotive et que la vue vers l'extrémité distante de la rame est limitée. En ce qui concerne une cabine dépassant du toit, les inconvénients sont qu'un dépassement n'est pas possible si la caisse a des dimensions se rapprochant du gabarit autorisé, qu'il est néfaste pour l'aérodynamisme et qu'en outre les feux de signalisation de manoeuvre souvent placés au ras du sol ne sont visibles que de loin pour peu que le toit ait une certaine longueur devant la cabine.

Le but de l'invention est d'une part de réduire le coût global des cabines de conduite en en diminuant le nombre et d'autre part d'autoriser la conduite dans les deux sens à partir d'une même cabine.

L'objet de l'invention est un système de déport de cabine mettant en jeu des équipements de prise de vue, un équipement de transmission en général par câble mais faisant éventuellement appel à une liaison radio ou optique, et un équipement d'affichage devant le mécanicien.

Le principe d'une imagerie électronique à déport est connu.

Le brevet FR.2.677.833 qui se rapporte à une installation de télésurveillance décrit un système composé
d'un premier poste comprenant une caméra vidéo de prise de vue et un émetteur de télévision à balayage lent,
d'un deuxième poste comprenant un récepteur de télévision à balayage lent et un moniteur relié à la sortie de ce récepteur. Ces postes dont au moins un est mobile comprennent en outre des moyens respectifs de liaison aptes à leur permettre de communiquer entre eux à travers un système de télécommunication pré-existant qui inclut le réseau téléphonique public et au moins une voie de liaison du type radio-mobile.

La réalisation décrite vise particulièrement la surveillance à distance de moyens et d'objets en mouvement dans le cas où l'émetteur ne peut être relié à une ligne téléphonique normale (camion, fourgon blindé, détection de glissements de terrain, etc...).

Une autre mode de réalisation selon FR 2.677.833 est caractérisé en ce que le premier et le deuxième poste sont tous deux mobiles et comprennent chacun une caméra reliée à un émetteur à balayage lent, et un moniteur relié à un recepteur à balayage lent, émetteur et récepteur étant accouplés à un terminal radio apte à émettre ou recevoir des signaux vers ou provenant du réseau téléphonique.

### DESCRIPTION DE L'INVENTION

L'invention sera mieux comprise à la lecture d'un procédé de réalisation préférentiel et de certaines variantes de ce procédé, qui ne sont indiqués que pour illustrer l'invention et qui n'en restreignent en aucune façon la portée.

La description de ce procédé préférentiel s'appuie sur les figures suivantes :
- la figure 1 donne un schéma général du déport de cabine de conduite,
- la figure 2 représente une configuration d'utilisation en local,
- la figure 3 représente une configuration d'utilisation dans une locomotive existante,
- la figure 4 représente une configuration dans une locomotive construite en prévision de l'utilisation d'un déport tel que décrit dans l'invention,
- la figure 5 représente une configuration dans une rame automotrice construite en prévision de l'utilisation d'un déport tel que décrit dans l'invention.

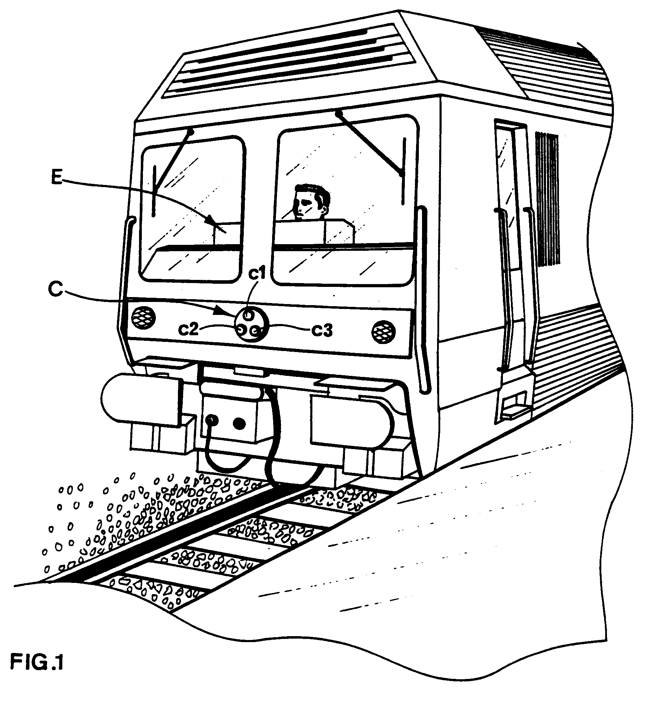

On voit sur la figure 1 un ensemble de caméras de prise de vue C. Chacune d'elles est orientable et à focale variable. A un certain moment, la caméra C1 est affectée à la prise d'une vue générale avec une focale assez courte, la caméra C2 est affectée à la prise de vue d'un détail, avec une focale assez longue et la caméra C3 se tient en réserve pour se substituer à l'une ou l'autre caméra en cas de défaillance. Leurs rôles sont interchangeables. Les caméras peuvent être équipées d'un dispositif de mesure de la température de couleur, afin de s'adapter rapidement aux modifications de l'éclairage (tunnel, nuit, etc...).

On voit en cabine de conduite deux écrans superposés, par exemple au format 16/9. Le premier affiche la vue générale et le second la vue de détail. L'écran affichant la vue générale est un écran tactile. Si le mécanicien y promène son doigt, l'orientation et la focale de la caméra donnant la vue de détail s'adaptent de façon que tous les points désignés soient sur le deuxième écran, avec la plus longue focale le permettant. En option, un système de traitement d'image travaillant par corrélation entre images successives modifie le pointage de la caméra donnant la vue de détail pour que le centre de l'image ne bouge pas. L'intention est de permettre de suivre un point particulier, par exemple une cible de signalisation à mesure du défilement du train.

L'invention comporte en outre, en option les perfectionnements suivants :
- un système d'analyse de couleurs qui recherche les zones dont la couleur s'éloigne peu de couleurs prédéfinies comme étant celles des cibles de signalisation (vert, jaune, rouge et violet). Il met en évidence sur l'un ou l'autre des écrans les zones reconnues comme ayant ces couleurs. Il ne le fait que lorsque le mécanicien le demande expressément par une commande.
- Un dispositif d'incrustation dans l'image permet de faire apparaître des alarmes ou des messages divers, y compris des pictogrammes.
- Un signal fourni par l'une ou par plusieurs des caméras est archivé sur magnétoscope afin de servir de complément à l'enregistreur des éléments de la conduite ("Boîte noire") et de donner des informations sur les moments qui ont précédé une éventuelle collision. L'archivage est permanent mais peut être effacé lorsque le motif de l'archivage a perdu toute utilité. Il peut être réalisé en substituant à l'ensemble caméras-magnétoscopes, des caméscopes.

On peut envisager diverses configurations d'utilisation de ce déport d'images.

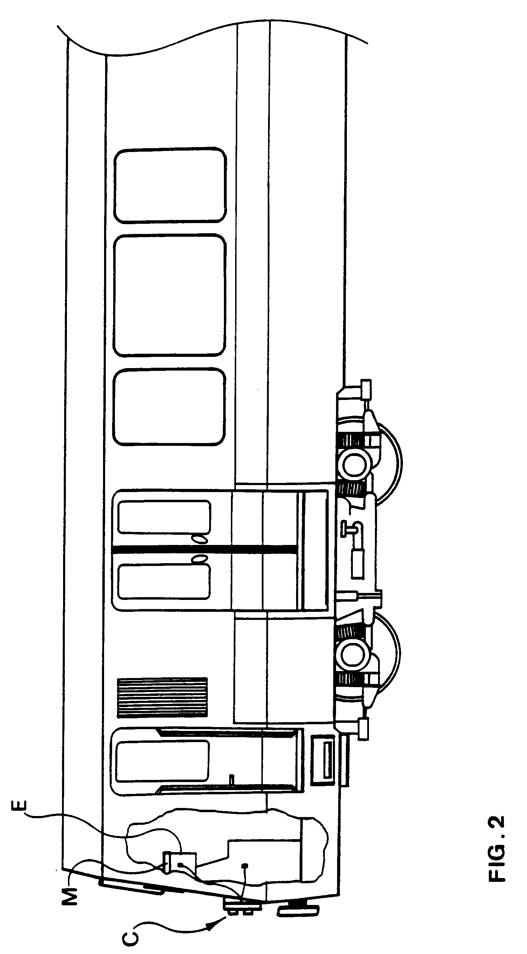

La figure 2 représente une utilisation locale, dans laquelle les écrans se trouvent à proximité immédiate des caméras. L'intérêt de cette configuration est de permettre une meilleure vision, notamment grâce aux vues de détail mais aussi par une meilleure adaptation aux conditions de visibilité et par une meilleure protection contre les salissures, mettant en jeu par exemple un hublot tournant devant l'ensemble des caméras, un déflecteur, un rayon laser et de permettre l'incrustation de messages et d'archiver.

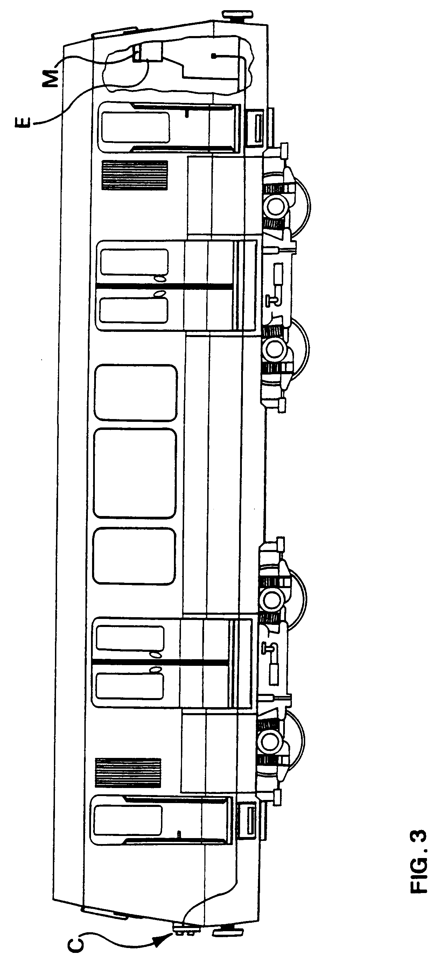

La figure 3 représente une locomotive existante dans laquelle on a mis les caméras dans ou devant l'une des cabines et les écrans dans l'autre, le déport d'images se faisant par exemple grâce à un câble à fibres optiques. L'intérêt est, lors d'une modernisation d'une locomotive existante, de ne moderniser qu'une seule cabine.

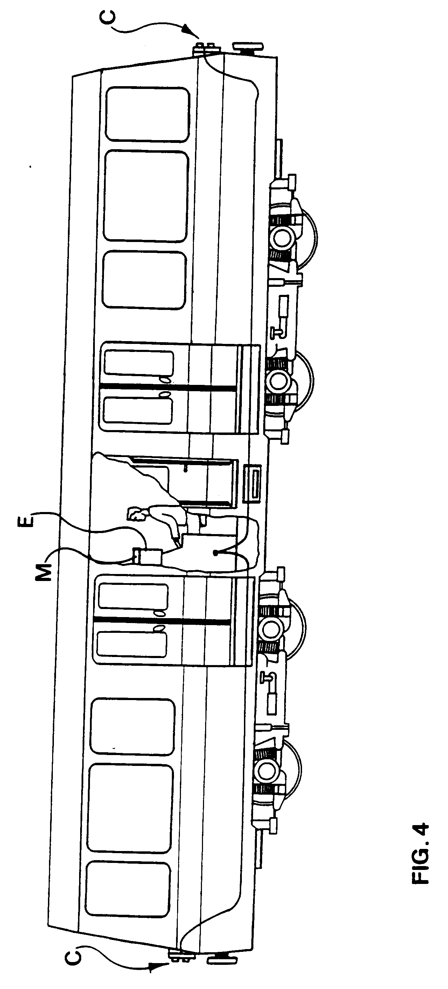

La figure 4 représente une locomotive neuve, équipée d'une seule cabine de conduite. L'intérêt, outre un gain de place et de tare, est de localiser cette cabine à un endroit assurant une meilleure protection du mécanicien en cas de choc, par exemple au centre de la locomotive.

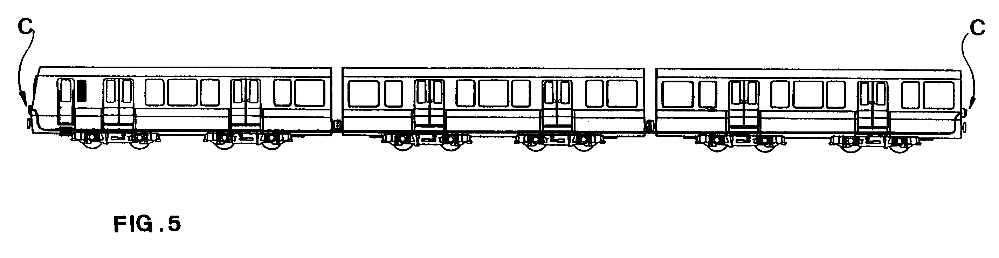

La figure 5 représente une rame automotrice neuve, également équipée d'une seule cabine. La cabine peut cette fois être placée n'importe où dans la rame. L'intérêt est de permettre au mécanicien de ne pas changer de place lors d'un retournement de la rame. Si l'élément automoteur doit être couplé à un autre élément automoteur pour accroître la capacité, comme c'est fréquemment le cas sur des rames de banlieue ou sur des Trains à Grande Vitesse, la liaison entre éléments peut faire appel à une connexion optique, ou coaxiale, ou par hyperfréquences. Ceci est également valable pour des rames classiques composées d'une ou plusieurs locomotives et de voitures, fourgons ou wagons.

## Revendications

1. Système de déport d'imagerie appliqué à la conduite de véhicules et convois ferroviaires caractérisé par un ensemble d'une ou de plusieurs caméras de prise de vue orientables ou non à focale variable ou fixe, par un ou plusieurs écrans, le seul ou le premier affichant une vue générale et en cas de pluralité d'écrans, le second une vue de détail, l'écran de vue générale pouvant être de type tactile, ainsi qu'éventuellement un ou plusieurs magnétoscopes.

2. Système selon la revendication 1 dans lequel la caméra C1 est affectée à la prise d'une vue générale de la voie avec focale courte, la caméra C2 est affectée à la prise de vue de détails avec focale longue, la caméra C3 est tenue en réserve pour se substituer à l'une ou l'autre des caméras C1 et C2 en cas de défaillance, ces trois caméras étant polyvalentes, interchangeables, facultativement orientables et équipées optionnellement d'un dispositif de mesure de la température de couleur afin de pouvoir s'adapter rapidement aux modifications de l'éclairage du jour et de la nuit, de la progression en rase campagne, dans les agglomérations, dans les tunnels.

3. Système selon la revendication 1 dans lequel l'orientation et la focale de la caméra donnant la vue de détail s'adaptent de façon que tous les points désignés sur le premier écran soient aussi sur le deuxième écran avec la plus longue focale le permettant.

4. Dispositif selon les revendications 1 et 2 équipé en sus d'un système de traitement d'image travaillant par corrélation entre prises à des instants différents par exemple avec des images successives et modifiant le pointage de la caméra donnant la vue de détail.

5. Système selon les revendications 1, 2, 3 et 4, dans lequel caméras et magnétoscopes séparés sont remplacés par des caméscopes.

6. Système selon la revendication 1, comportant un système d'analyse de couleurs recherchant les zones dont la couleur s'éloigne peu des couleurs prédéfinies comme étant celles des cibles de signalisation.

7. Système selon les revendications 1, 2 et 3 dans lequel les écrans se trouvent à proximité immédiate des caméras.

8. Système selon les revendications 1, 2 et 3 dans lequel les écrans se trouvent déportés par rapport aux caméras et reliés par cable métallique ou à fibre optique.

9. Système selon la revendication 1 caractérisé par le fait qu'au moins un ensemble caméra-magnétoscope est remplacé par un ou plusieurs camescopes.

10. Système selon la revendication 1 caractérisé par un ensemble de deux caméras, de deux écrans et d'un magnétoscope.

11. Système selon la revendication 1 caractérisé par un ensemble de deux caméscopes et de deux écrans.

12. Système selon la revendication 1 caractérisé par un ensemble composé d'un caméscope, d'une caméra, d'un magnétoscope et de deux écrans.

13. Système selon la revendication 1 dans lequel la cabine déportée peut être constituée par un module détachable.

14. Système selon l'une quelconque des revendications 1 à 13 dans lequel le déport d'images est réalisé grâce à un câble à fibres optiques.

15. Système selon l'une quelconque des revendications 1 à 13 dans lequel le déport d'images est réalisé par liaison coaxiale.

16. Système selon l'une quelconque des revendications 1 à 13 dans lequel tout ou partie de la liaison entre prises de vues et écrans est réalisée en hyperfréquences.

## Claims

1. An imaging offset system applied to the driving of vehicles and railway trains, characterised by a set of one or more orientable or non-orientable cameras, of variable or fixed focal length, by one or more screens, the sole one or the first one displaying a general view and in the event of there being more than one screen, the second displaying a detail view, the general view screen possibly being of the tactile type, and also possibly one or more video recorders.

2. A system according to Claim 1, in which camera C1 is assigned to taking a general view of the track with a short focal length, camera C2 is assigned to taking details with a long focal length, camera C3 is kept in reserve to substitute for one or the other of cameras C1 and C2 in the event of failure, these three cameras being multi-purpose, interchangeable, optionally orientable and optionally equipped with a device for measuring the colour temperature in order to be able to adapt rapidly to the changes in lighting for the day and night, for travelling in open country, in built-up areas and in tunnels.

3. A system according to Claim 1, in which the orientation and the focal length of the camera providing the detail view are adapted such that all the points designated on the first screen are also on the second screen with the longest focal length permitting this.

4. A device according to Claims 1 and 2, furthermore equipped with an image processing system operating by correlation between shots at different moments for example with successive images and modifying the pointing of the camera giving the detail view.

5. A system according to Claims 1, 2, 3 and 4, in which separate cameras and video recorders are replaced by camcorders.

6. A system according to Claim 1, comprising a colour analysis system seeking the zones having colours which are very close to the colours predefined as being those of the signalling targets.

7. A system according to Claims 1, 2 and 3 in which the screens are located in the immediate vicinity of the cameras.

8. A system according to Claims 1, 2 and 3, in which the screens are offset relative to the cameras and connected by metal cable or optical fibre.

9. A system according to Claim 1, characterised by the fact that at least one camera/video recorder unit is replaced by one or more camcorders.

10. A system according to Claim 1, characterised by a set of two cameras, two screens and a video recorder.

11. A system according to Claim 1, characterised by a set of two camcorders and two screens.

12. A system according to Claim 1, characterised by a set composed of a camcorder, a camera, a video recorder and two screens.

13. A system according to Claim 1, in which the offset cabin may be constituted by a detachable module.

14. A system according to any one of Claims 1 to 13, in which the image offset is achieved by means of a fibre-optic cable.

15. A system according to any one of Claims 1 to 13, in which the image offset is achieved by a coaxial connection.

16. A system according to any one of Claims 1 to 13, in which all or part of the connection between the pictures taken and the screens is achieved using ultra-high frequencies.

## Patentansprüche

1. Bildübertragungssystem zum Führen von Fahrzeugen und Eisenbahnzügen,
**dadurch gekennzeichnet**
daß es eine Einheit mit einer oder mehreren Aufnahmekameras, ausrichtbar oder nicht, mit variabler oder fester Brennweite, und einen oder mehrere Bildschirme umfaßt, wobei der einzige oder der erste eine Gesamtsicht anzeigt und, im Falle mehrerer Bildschirme, der zweite eine Detailansicht und der Gesamtsicht-Bildschirm ein Tastbildschirm sein kann, sowie eventuell ein Magnetoskop oder mehrere.

2. System nach Anspruch 1, bei dem die Kamera C1 der Gesamtsicht-Aufnahme des Geleises mit kurzer Brennweite zugeordnet ist, die Kamera C2 der Detailansicht mit langer Brennweite zugeordnet ist, die Kamera C3 in Reserve gehalten wird, um die eine oder die andere der Kameras C1 und C2 im Falle eines Ausfalls zu ersetzen, wobei diese drei Kameras austauschbare, wahlweise ausrichtbare Vielzweckkameras sind, die bei Bedarf mit einer Farbtemperatur-Meßeinrichtung ausrüstet werden können, um sich schnell an die Beleuchtungsveränderungen des Tags und der Nacht, an die Fortbewegung auf freier Strecke, in den Agglomerationen, in den Tunnels anpassen zu können.

3. System nach Anspruch 1, bei dem die Ausrichtung und die Brennweite der die Detailansicht liefernden Kamera sich derart anpaßt, daß alle auf dem ersten Bildschirm bezeichneten Punkte sich auch auf dem zweiten Bildschirm befinden, mit der längstmöglichen Brennweite.

4. System nach den Ansprüchen 1 und 2, zusätzlich mit einem Bildverarbeitungssystem ausgerüstet, das durch Korrelation zwischen Aufnahmen zu verschiedenen Zeitpunkten mit aufeinanderfolgenden Aufnahmen arbeitet und die Ausrichtung der Kamera verändert, die die Detailansicht liefert.

5. System nach den Ansprüchen 1, 2, 3 und 4, bei dem getrennte Kameras und Magnetoskope durch Camcorder ersetzt werden.

6. System nach Anspruch 1, ein Farbenanalysesystem erfassend, das die Zonen sucht, deren Farbe sich wenig von festgelegten Farben wie denen der Signalgebungsscheiben unterscheidet.

7. System nach den Ansprüchen 1, 2 und 3, bei dem die Bildschirme sich in unmittelbarer Nähe der Kameras befinden.

8. System nach den Ansprüchen 1, 2 und 3, bei dem die Bildschirme versetzt bzw. entfernt sind in bezug auf die Kameras und mit diesen über Metallkabel oder Lichtwellenleiter-Kabel verbunden sind.

9. System nach Anspruch 1, dadurch gekennzeichnet, daß wenigstens eine Kamera-Magnetoskop-Einheit durch einen oder mehrere Camcorder ersetzt wird.

10. System nach Anspruch 1, dadurch gekennzeichnet, daß es zwei Kameras, zwei Bildschirme und ein Magnetoskop umfaßt.

11. System nach Anspruch 1, dadurch gekennzeichnet, daß es zwei Camcorder und zwei Bildschirme umfaßt.

12. System nach Anspruch 1, dadurch gekennzeichnet, daß es einen Camcorder, eine Kamera, ein Magnetoskop und zwei Bildschirme umfaßt.

13. System nach Anspruch 1, dadurch gekennzeichnet, daß die versetzte Kabine durch einen herausnehmbaren Modul gebildet wird.

14. System nach einem der Ansprüche 1 bis 13, bei dem die Bildübertragung mittels eines Lichtwellenleiter-Kabels erfolgt.

15. System nach einem der Ansprüche 1 bisl 13, bei dem die Bildübertragung mittels Koaxialverbindung erfolgt.

16. System nach einem der Ansprüche 1 bis 13, bei dem die Verbindung zwischen den Aufnahmen und den Bildschirmen mittels Höchstfrequenzen erfolgt.
